# EUROPEAN PATENT SPECIFICATION

(11) **EP 1 899 055 B1**
(45) Date of publication and mention of the grant of the patent: **02.08.2017**
(21) Application number: 06752427.2
(22) Date of filing: 09.05.2006
(51) Int. Cl.: B01J 23/745, B01J 37/12, C01B 3/16, C10G 2/00

(54) **HIGH SURFACE AREA IRON MATERIAL PREPARED FROM A LOW SURFACE AREA IRON METAL PRECURSOR**
EISENHALTIGES MATERIAL HOHER OBERFLÄCHE, HERGESTELLT AUSGEHEND VON EINEM METALLISCHEM EISEN -VORLÄUFER MIT NIEDRIGER OBERFLÄCHE
MATERIAU FERREUX A SURFACE ACTIVE ELEVEE, PREPARE A PARTIR D'UN PRECURSEUR DE METAL FERREUX A SURFACE ACTIVE REDUITE

(30) Priority: 25.05.2005 US 684462 P
(43) Date of publication of application: 19.03.2008
(73) Proprietor: Clariant Corporation, Charlotte, NC 28205 (US)
(72) Inventor: PETRINI, Guido, 28066 Galliate (Novara) (IT); CONCA, Esterino, 28100 Novara (Novara) (IT); O'BRIEN, Robert, Louisville, Kentucky 40243 (US); HU, X.D., Louisville, Kentucky 40241 (US); SARGENT, Samantha, Borden, IN 47106 (US)
(74) Representative: Stolmár & Partner Patentanwälte PartG mbB
(86) International application number: PCT/US2006/017834
(87) International publication number: WO 2006/127261

(56) References cited:
- WO-A-03/097236
- GB-A- 287 702
- GB-A- 1 226 876
- US-A1- 2003 175 204

## Description

### Background

The present invention is for a method for producing a high surface area iron material starting with a low surface area iron metal. The iron material of the present invention has a surface area of at least about 200 m2/g, and is prepared via a method which comprises reacting a low surface area iron metal with oxygen and an organic acid. The high surface area iron material formed via this method is essentially free of contaminants.

Iron-based catalysts are known in the art for use in a variety of chemical reactions. For example, in water gas shift reactions it is common practice to employ chromium-promoted iron catalysts, in a high temperature first stage (referred to as a high temperature shift or HTS reaction) to effect carbon monoxide conversion at temperatures above about 3500C and to reduce the CO content to about 3% - 4% (see, for example, D.S. Newsom, Catal. Rev., 21, p. 275 (1980)). A typical composition of high temperature shift (HTS) catalyst comprises from about 60 wt% to about 95 wt% Fe2θ3, from about 0 wt% to about 20 wt% Cr2O3, from about 0 wt% to about 10 wt% of CuO and from about 0 wt% to about 10 wt% other active components such as ZrO2, TiO2, Co3O4, Al2O3, SiO2 and/or CeO2.

Since the 1950's iron-based Fischer-Tropsch catalysts have been successfully used in fixed-bed, fiuidized-bed and slurry phase reactors, and there have been several methods used for the preparation of iron-based Fischer-Tropsch catalysts. The earliest catalysts, prepared by Fischer, were iron turnings treated with alkali. At high pressure, the liquid product was rich in oxygenated compounds, and at lower pressures hydrocarbons were produced. However, the iron-based catalysts prepared by this method deactivated rapidly.

The most common method of preparation of iron-based Fischer-Tropsch catalysts is precipitation. Typically a solution of an iron salt, such as ferric nitrate, is treated with a base, such as aqueous ammonia or sodium carbonate. The resulting iron oxyhydroxide precipitate is washed and filtered repeatedly to remove salts - ammonium nitrate or sodium nitrate - formed during the precipitation process. The washed filter cake is then dried and calcined. Promotion of the precipitated iron catalyst with copper and a Group I metal can be done at any time, before or after the drying and calcination steps. The final catalyst precursor is usually composed of high surface area corundum phase iron oxide (α-Fe₂O₃ or hematite).

Other types of iron based catalysts include, fused iron, supported iron and sintered iron. Fused iron catalysts are prepared by melting iron ore and one or more promoter such as SiO₂, Al₂O₃, CaO, MgO and K₂O. The resulting catalyst precursor is usually composed predominantly of magnetite (Fe₃O₄) and has very low surface area. Active fused iron catalysts can only be achieved by reduction of the oxide to metallic iron with hydrogen. The reduced catalyst can have surface area up to about 10 to 15 m²/g. Fused iron catalysts are characterized by high structural integrity and as such are well suited for fluid bed operations; however, the relatively low surface area results in a Fischer-Tropsch catalyst with inferior activity as compared to typical precipitated iron catalysts. Supported iron catalysts are usually prepared by impregnating a solution of an iron salt onto a refractory metal oxide such as Al₂O₃, SiO₂, TiO₂ or ZrO₂. The impregnation can be carried out by incipient wetness techniques or by excess wetting followed by vacuum drying. Supported iron catalysts can have Fischer-Tropsch activity similar to precipitated iron catalysts on an iron mass basis; however, they are typically inferior on a catalyst volume basis. Supported iron catalysts inevitably suffer from the acidity of the metal oxide supports which increases the selectivity of undesirable methane.

Precipitated iron catalysts are generally regarded as superior Fischer-Tropsch catalysts to the other types of iron catalysts described herein. The major disadvantages of the manufacture of precipitated iron catalysts include high cost, the method is labor intensive, and the by-products are deleterious to the environment. Iron nitrate is the preferred iron source of precipitated iron catalysts because chloride and sulfur contamination from iron chloride or iron sulfate would have a deleterious effect on the activity of the resulting F-T catalyst. Iron nitrate is manufactured by the digestion of iron metal in nitric acid which produces nitrogen oxides that must be recovered by a scrubbing process. This necessary scrubbing step adds additional cost to the process.

A process to produce iron-based Fischer-Tropsch catalysts that reduces or eliminates the washing and filtration steps and has minimal emissions to the environment would be favorable. A logical process from a commercial viewpoint would be to promote, form, dry and calcine a commercially available iron oxide that has high purity and high surface area. Commercial iron oxides are readily available; however, they are usually prepared by treatment of steel with hydrochloric acid or sulfuric acid. These iron oxides contain significant amounts of impurities including chloride and sulfur which makes them unusable as raw materials for Fischer-Tropsch catalysts. As is known in the art, the impurities of the commercial iron oxides (red or yellow iron oxides) can be reduced to a very low level by the pickling process under very high temperatures. However, because of the extreme conditions of the pickling process, the surface area of the iron oxide is generally less than 10 m²/g making the iron oxide unsuitable for some catalyst applications, for example, low temperature Fischer-Tropsch reaction.

Alternatively, a low contaminant iron oxide material may be used, such as the iron oxide taught in U.S. Patent 6,790,274 (issued to Conca et al. on Sept 14, 2004, and assigned to Sud-Chemie MT), U.S Patent Application 20040009871 (inventors Hu et al., published on January 15, 2004) and U.S. Patent Application 20040202606 (inventors Conca et al, published on October 14, 2004). In US 2003/0175204 highly pure iron oxides prepared by reaction of metallic iron is described. However, the iron oxides produced by the process taught in the '274 patent, the '871 application, the '606 application and the '204 application have surface areas of less than about 150 m²/g.

### Summary of the Present Invention

A method of making an iron material, said method comprising: adding water to a temperature-controlled reaction vessel fitted with a condenser and chiller, and having a means for agitating the contents of the vessel; adding iron metal to said vessel with agitation, wherein said iron metal has a surface area of less than 25 m²/g and is essentially free of contaminants, although traces of carbon, manganese, nickel, copper, silicon and combinations thereof may be present less than 1.5 wt% for all the elements combined; purging said vessel with an inert gas while maintaining agitation; forming an organic acid/iron solution combination by adding glacial acetic acid to said vessel with continued agitation and while maintaining the inert atmosphere; agitating said organic acid/iron solution combination for a predetermined period of time under the inert atmosphere; stopping said inert gas purge and forcing an oxidizing agent through said organic acid/iron solution concurrently with a defoaming agent until said iron metal is consumed and an iron material slurry is formed, wherein said oxidizing agent is delivered to said organic acid/iron solution via a hollow shaft mixer in which oxygen flows through the shaft and is discharged underneath an impeller for agitation; filtering said iron material slurry and retaining a first filter cake; adding said first filter cake to water to form a second iron material slurry; filtering said second iron material slurry and retaining a second filter cake; and air drying said second filter cake to produce an iron material having a surface area of at least 200 m²/g.

### Detailed Description of the Preferred Embodiments

The high surface area iron material of the present invention is intended for use in any iron-based catalyst requiring a high surface area. The iron material differs from the iron oxides of the prior art by having a surface area of at least about 200 m²/g. Further, the process by which the iron material is prepared is novel and produces an iron material that is essentially free of contaminants, and which has a relatively narrow particle size distribution range, and a high surface area, and which can be produced more efficiently than iron oxide materials of the prior art.

Broadly presented, the process for preparing a preferred embodiment of the iron material of the present invention includes directly treating iron metal with a mild organic acid and oxygen while vigorously agitating the mixture to form a slurry consisting of iron oxyhydroxide, iron hydroxide, iron oxide hydrate, or the other amorphous or poorly ordered iron phases, then filtering the slurry to produce a filter cake, then reslurrying the filter cake and refiltering the slurry, and then drying the filter cake. More
specifically, to prepare the iron material of the present invention, water is added to a temperature-controlled reaction vessel fitted with a condenser and chiller, and having a means for mixing or similarly agitating the contents of the vessel. The reaction vessel is held at a temperature of from 0°C to 40°C and is fitted with a condenser held at from 0°C to 5°C. Iron metal is added to the reaction vessel and the vessel is purged with an inert gas. As the iron and water are agitated and while maintaining the inert atmosphere, an organic acid is added to the vessel. After the acid / iron combination is mixed for a predetermined period of time under the inert atmosphere, oxygen is added to the reaction vessel with vigorous agitation. A defoaming agent is further added to the vessel as needed either at the beginning of the oxidation step or during the oxidation step. After a predetermined amount of oxygen has been added to the reaction vessel, the resultant slurry is filtered. The slurry filter cake is then added to water, reslurried and the slurry is filtered. The filter cake is then dried to produce the high surface area iron material.

The iron metal may be a powder, granule, sphere, chip, shard, needle or other form of iron metal, and has a surface area of less than about 25 m²/g, and is essentially free of contaminants. As described herein, the iron metal has an average diameter of from 1µ to 500µ. (As used herein, the term micron (µ) means a metric distance equal to one millionth of a meter and is used interchangeably with micrometer.) However, iron metal with a larger average diameter may be used, but the reaction time may need to be altered (increased) to ensure that the iron metal has adequate time to react. In one embodiment, the iron metal is in micro-spheroidal form with an average diameter of from 40µ, to 150µ. Further, the iron metal should be essentially contaminant-free, although traces of carbon, manganese, nickel, copper, silicon and combinations thereof, may be present. (As used herein, "traces" is defined as less than about 1.5 wt% for all the elements combined.) The organic acid is glacial acetic acid. The acid to iron ratio may vary. In the present invention, the acid to iron mole ratio is preferably between 0.1 acid per 1 iron to 2.5 acid per 1 iron.

The inert gas can be any non-reactive material known in the art, such as nitrogen gas or argon gas. Normally, nitrogen gas is used commercially because of its relatively low cost.

The defoaming agent can be any organic or silicone based defoaming agents, such as oils, oily alcohols, alcohols, esters, ethers, glycols, polysiloxanes, dimethylpolysiloxane, C₈ to C₁₂ alcohols and a combination thereof. In a preferred embodiment, a long chain oxygenated hydrocarbon, such as octanol, decanol and polyethylene glycols and a combination thereof can be used.

The oxidizing agent is preferably oxygen which is forced through the solution via the hollow shaft of the mixer such that the oxygen flows through the shaft and is discharged underneath the impeller, or via a stainless steel sparger mounted within a mix tank, however, a variety of other means as are known in the art may be used to bubble oxygen through the acid / iron combination. The oxygen must be well dispersed throughout the entire volume of the solution in order to produce the desired high surface area iron material. In a preferred embodiment, the mixer is equipped with multiple impellers for gas dispersion and solid mixing, including a radial flow gas dispersion impeller and an axial flow solid mixing impeller. The oxygen flow is continued and the reaction temperature is held at less than about 40°C until essentially all the free iron is consumed and an iron material slurry is formed. The slurry is believed to comprise iron oxide hydrate, iron oxide, iron hydroxide, iron oxyhydroxide, amorphous or poorly ordered phases in a general formula of FeₓO_{y}(OH)_{z} and a combination thereof. Total iron consumption time can range from 18 hours to 24 hours, or longer depending on the iron source. During the course of the reaction, the slurry color changes from gray to brown. Typically, the color change will be evident from 45 minutes to 6 hours after the oxygen flow is started. Unreacted iron can be detected by X-ray diffraction patterns.

The following example illustrates and explains the present invention, but is not to be taken as limiting the present invention in any regard.

Comparison example 1: A sample of high surface area iron material is prepared as follows: A stainless steel air sparger is fitted into the bottom of a 3 liter jacketed vessel and the temperature is adjusted to hold at about 30 °C. About 700 mL of deionized water is added to the vessel and agitation is started at a mix rate of about 600 RPM. About 93.3 g of iron powder (commercially available from Hoeganaes and designated by product code ATW-432, and having an iron metal surface area of about 0.2 m²/g) is added to the water with mixing. The iron powder is added slowly enough to maintain a reaction temperature of less than about 30°C. A nitrogen purge is started at a rate of about 35 liters per hour. About 50.4 g of glacial acetic acid (commercially available from Fisher Chemicals) is added to the iron and water mixture with a continuing nitrogen purge. After about a four hour nitrogen purge, the nitrogen is replaced by a pure oxygen gas flow at a rate of about 50 liters per hour and is maintained for about 20 hours. As needed during the oxygen addition, 0.7g 1-octanol (commercially available through Sigma Chemicals) and / or 0.75g 1-octanol plus 0.35g 1-decanol (commercially available through Sigma Chemicals) is added to the vessel to reduce foaming. The iron material slurry is then filtered over no. 42 filter paper. The filter cake is then reslurried with about 3000 mL of deionized water and the mixture is filtered a second time. The filter cake is then dried for about 16 hours at about 120 °C. The single point surface area (out-gassed at 1500C for about 1.5 hours) is about 200m²/g.

Example 2: A sample of high surface area iron material is prepared by the inventive method presented herein as follows: A 0.9 liter jacketed vessel, equipped with a hollow shaft stirrer and three vertical stainless steel buffles, about 113 mm long, about 16 mm wide and about 2 mm thick is used. The temperature is adjusted to hold at about 30 °C, about 300 mL of deionized water is added to the vessel and agitation is started at a mix rate of about 450 RPM. About 40g of iron powder (commercially available from POMETON and designated by product FERCHIM RI 63/3.2, and having an iron metal surface area of about 0.1 m²/g) is added to the water with mixing. The iron powder is added slowly enough to maintain a reaction temperature of less than about 30 °C. A nitrogen purge is started at a rate of about 25 liters per hour. About 11.7g of glacial acetic acid (commercially available from Riedel de Haen-Germany) is added to the iron and water mixture with a continuing nitrogen purge. After about a four hour nitrogen purge, the nitrogen is replaced by a pure oxygen gas flow at a rate of about 25 liters per hour and is maintained for about 20 hours. The gas flow was supplied on the top of the reactor. The iron material slurry is then filtered over no. 42 filter paper. The filter cake is then reslurried with about 300 mL of deionized water and the mixture is filtered a second time. The filter cake is then dried for about 16 hours at about 140 °C. The single point surface area (out-gassed at 1100C for about 1.5 hours) is about 290 m²/g.

The iron material of the present invention is intended for use in any catalyst requiring a high surface area iron. The process by which the material is prepared produces a finished product essentially free from contaminants, and having a relatively small particle size distribution range, and a high surface area.

## Claims

1. A method of making an iron material, said method comprising:
a) adding water to a temperature-controlled reaction vessel fitted with a condenser and chiller, and having a means for agitating the contents of the vessel;
b) adding iron metal to said vessel with agitation, wherein said iron metal has a surface area of less than 25 m²/g and is free of contaminants, wherein traces of carbon, manganese, nickel, copper, silicon and combinations thereof are present in an amount of less than 1.5 wt% for all the elements combined;
c) purging said vessel with an inert gas while maintaining agitation;
d) forming an organic acid/iron combination by adding glacial acetic acid to said vessel with continued agitation and while maintaining the inert atmosphere;
e) agitating said organic acid/iron combination for a predetermined period of time under the inert atmosphere;
f) stopping said inert gas purge and forcing an oxidizing agent through said acid solution concurrently with a defoaming agent until said iron metal is consumed and an iron material slurry is formed, wherein said oxidizing agent is delivered to said acid solution via a hollow shaft mixer in which oxygen flows through the shaft and is discharged underneath an impeller for agitation;
g) filtering said iron material slurry and retaining a first filter cake;
h) adding said first filter cake to water to form a second iron material slurry;
i) filtering said second iron material slurry and retaining a second filter cake; and
j) air drying said second filter cake to produce an iron material having a surface area of at least 200 m²/g.

2. The method of claim 1 wherein the vessel is held at a temperature of less than 40°C fitted with a condenser held at 5°C.

3. The method of claim 1 wherein said iron metal is selected from a powder, granule, sphere, chip, shard or needle.

4. The method of claim 3 wherein said iron metal has an average diameter of from 1µ to 500µ.

5. The method of claim 1 wherein said means for agitating the contents of the vessel are multiple impellers for gas dispersion and solid mixing.

6. The method of claim 1 wherein said multiple impellers consists of a radial flow impeller and an axial flow impeller.

7. The method of claim 1 wherein said inert gas is nitrogen.

8. The method of claim 1 wherein the mole ratio of acid to iron ranges from 0.1 acid:1 iron to 2.5 acid:1 iron.

9. The method of claim 1 wherein said oxidizing agent is oxygen.

10. The method of claim 1 wherein said defoaming agent is selected from the group consisting of an organic defoaming agent, a silicone based defoaming agent, an oil, an oily alcohol, an alcohol, an ester, an ether, a glycol, a polysiloxane, a dimethylpolysiloxane, a C₈ to C₁₂ alcohol, and a combination thereof.

11. The method of claim 10 wherein said defoaming agent is polyethylene glycol, octanol, decanol or a combination thereof.

## Patentansprüche

1. Verfahren zur Herstellung eines Eisenmaterials, wobei das Verfahren umfasst:
a) Zugeben von Wasser zu einem temperaturgesteuerten Reaktionsgefäß, das mit einem Kondensator und Kühler ausgerüstet ist und das Mittel zum Rühren der Inhalte des Gefäßes aufweist;
b) Zugeben von Eisenmetall zu dem Gefäß unter Rühren, wobei das Eisenmetall eine Oberfläche von weniger als 25 m²/g aufweist und frei von Verunreinigungen ist, wobei Spuren von Kohlenstoff, Mangan, Nickel, Kupfer, Silizium und Kombinationen hiervon in einer Menge von weniger als 1,5 Gew.-% bezogen auf die Kombination all dieser Elemente vorhanden sind;
c) Durchspülen des Gefäßes mit einem inerten Gas unter Beibehaltung des Rührens;
d) Ausbilden einer Kombination von organischer Säure/Eisen durch Zugeben von Eisessigsäure zu dem Gefäß bei fortdauerndem Rühren und unter Beibehaltung der inerten Atmosphäre;
e) Rühren der Kombination von organischer Säure/Eisen für eine vorbestimmte Zeitdauer unter der inerten Atmosphäre;
f) Stoppen der Inertgasspülung und Treiben eines Oxidationsmittels durch die Säurelösung gleichzeitig mit einem Entschäumungsmittel, bis das Eisenmetall verbraucht ist und eine Eisenmaterialaufschlämmung ausgebildet ist, wobei das Oxidationsmittel der Säurelösung über einen Hohlwellenmischer zugeführt wird, durch dessen Welle Sauerstoff fließt und unterhalb eines Laufrades zum Rühren ausgegeben wird;
g) Filtern der Eisenmaterialaufschlämmung und Zurückbehalten eines ersten Filterkuchens;
h) Zugeben des ersten Filterkuchens zu Wasser, um eine zweite Eisenmaterialaufschlämmung auszubilden;
i) Filtern der zweiten Eisenmaterialaufschlämmung und Zurückbehalten eines zweiten Filterkuchens; und
j) Lufttrocknen des zweiten Filterkuchens, um ein Eisenmaterial herzustellen, das eine Oberfläche von mindestens 200 m²/g aufweist.

2. Verfahren nach Anspruch 1, wobei das Gefäß bei einer Temperatur von kleiner als 40 °C gehalten wird und ausgerüstet ist mit einem Kondensator, der bei 5 °C gehalten wird.

3. Verfahren nach Anspruch 1, wobei das Eisenmetall ausgewählt ist aus einem Pulver, einem Granulat, einer Kugel, einem Chip, einer Scherben oder einer Nadel.

4. Verfahren nach Anspruch 3, wobei das Eisenmetall einen mittleren Durchmesser von 1µ bis 500µ aufweist.

5. Verfahren nach Anspruch 1, wobei die Mittel zum Rühren der Inhalte des Gefäßes mehrere Laufräder zur Gasverteilung und Feststoffvermischung sind.

6. Verfahren nach Anspruch 1, wobei die mehreren Laufräder aus einem radialfördernden Laufrad und einem axialfördernden Laufrad bestehen.

7. Verfahren nach Anspruch 1, wobei das inerte Gas Stickstoff ist.

8. Verfahren nach Anspruch 1, wobei das Molverhältnis der Säure zu Eisen im Bereich von 0,1 Säure: 1 Eisen bis 2,5 Säure: 1 Eisen liegt.

9. Verfahren nach Anspruch 1, wobei das Oxidationsmittel Sauerstoff ist.

10. Verfahren nach Anspruch 1, wobei das Entschäumungsmittel ausgewählt ist aus der Gruppe bestehend aus einem organischen Entschäumungsmittel, einem silikonbasierenden Entschäumungsmittel, einem Öl, einem öligen Alkohol, einem Alkohol, einem Ester, einem Ether, einem Glykol, einem Polysiloxan, einem Dimethylpolysiloxan, einem C₈- bis C₁₂-Alkohol, und einer Kombination hiervon.

11. Verfahren nach Anspruch 10, wobei das Entschäumungsmittel Polythylenglykol, Oktanol, Dekanol oder eine Kombination hiervon ist.

## Revendications

1. Procédé de fabrication d'un matériau de fer, ledit procédé comprenant :
a) ajouter de l'eau à un récipient réactionnel à commande de la température pourvu d'un condenseur et d'un refroidisseur, et ayant des moyens pour agiter le contenu du récipient ;
b) ajouter du métal de fer audit récipient avec agitation, dans lequel ledit métal de fer a une surface de moins de 25 m²/g et est exempt de contaminants, dans lequel des traces de carbone, manganèse, nickel, cuivre, silicium et de combinaisons de ceux-ci sont présentes en une quantité de moins de 1,5 % en poids pour tous les éléments combinés ;
c) purger ledit récipient avec un gaz inerte tout en maintenant l'agitation ;
d) former une combinaison d'acide organique/fer en ajoutant de l'acide acétique glacial audit récipient avec une agitation poursuivie et tout en maintenant l'atmosphère inerte ;
e) agiter ladite combinaison d'acide organique/fer pendant une période de temps prédéterminée sous l'atmosphère inerte ;
f) stopper ladite purge de gaz inerte et forcer un agent oxydant à travers ladite solution acide de manière concomitante à un agent antimousse jusqu'à ce que ledit métal de fer soit consommé et une boue de matériau de fer soit formée, dans lequel ledit agent oxydant est livré à ladite solution acide par le biais d'un mixeur à arbre creux dans lequel de l'oxygène s'écoule à travers l'arbre et est évacué en dessous d'un impulseur pour l'agitation ;
g) filtrer ladite boue de matériau de fer et retenir un premier gâteau de filtration ;
h) ajouter ledit premier gâteau de filtration à de l'eau pour former une seconde boue de matériau de fer ;
i) filtrer ladite seconde boue de matériau de fer et retenir un second gâteau de filtration ; et
j) sécher à l'air ledit second gâteau de filtration pour produire un matériau de fer ayant une surface d'au moins 200 m²/g.

2. Procédé selon la revendication 1, dans lequel le récipient est maintenu à une température de moins de 40°C pourvu d'un condenseur maintenu à 5°C.

3. Procédé selon la revendication 1, dans lequel ledit métal de fer est sélectionné parmi une poudre, un granule, une sphère, un copeau, un tesson ou une aiguille.

4. Procédé selon la revendication 3, dans lequel ledit métal de fer a un diamètre moyen de 1 µ à 500 µ.

5. Procédé selon la revendication 1, dans lequel lesdits moyens pour agiter le contenu du récipient sont de multiples impulseurs pour la dispersion gazeuse et le mélange de solides.

6. Procédé selon la revendication 1, dans lequel lesdits multiples impulseurs sont constitués d'un impulseur à écoulement radial et d'un impulseur à écoulement axial.

7. Procédé selon la revendication 1, dans lequel ledit gaz inerte est l'azote.

8. Procédé selon la revendication 1, dans lequel le rapport molaire d'acide sur fer va de 0,1 acide/1 fer à 2,5 acide/1 fer.

9. Procédé selon la revendication 1, dans lequel ledit agent oxydant est l'oxygène.

10. Procédé selon la revendication 1, dans lequel ledit agent antimousse est sélectionné parmi le groupe constitué d'un agent antimousse organique, d'un agent antimousse à base de silicone, d'une huile, d'un alcool huileux, d'un alcool, d'un ester, d'un éther, d'un glycol, d'un polysiloxane, d'un diméthylpolysiloxane, d'un alcool en C₈ à C₁₂ et d'une combinaison de ceux-ci.

11. Procédé selon la revendication 10, dans lequel ledit agent antimousse est le polyéthylèneglycol, l'octanol, le décanol ou une combinaison de ceux-ci.
